(19) Europäisches Patentamt
European Patent Office
Office européen des brevets

(11) **EP 2 549 642 A1**

(12) **EUROPEAN PATENT APPLICATION**
published in accordance with Art. 153(4) EPC

(43) Date of publication:
**23.01.2013 Bulletin 2013/04**

(51) Int Cl.:
*H02P 21/00* (2006.01)    *B66F 19/00* (2006.01)
*F15B 21/14* (2006.01)    *H02P 27/04* (2006.01)
*H02P 29/00* (2006.01)

(21) Application number: **11755955.9**

(22) Date of filing: **18.01.2011**

(86) International application number:
**PCT/JP2011/050758**

(87) International publication number:
**WO 2011/114765 (22.09.2011 Gazette 2011/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2010 JP 2010060944**

(71) Applicant: **Hitachi Construction Machinery Co., Ltd.**
**Bunkyo-ku,**
**Tokyo 112-8563 (JP)**

(72) Inventors:
• **MORIKI Hidekazu**
**Tokyo 100-8220 (JP)**
• **KANEKO Satoru**
**Hitachi-shi**
**Ibaraki 319-1292 (JP)**
• **IZUMI Shiho**
**Hitachi-shi**
**Ibaraki 319-1292 (JP)**
• **IKIMI Takashi**
**Tsuchiura-shi**
**Ibaraki 300-0013 (JP)**
• **YAMADA Hiroyuki**
**Hitachinaka-shi**
**Ibaraki 312-0034Tokyo 100-8220 (JP)**
• **MASANO Nobuo**
**Osaka 550-0003 (JP)**

(74) Representative: **Beetz & Partner**
**Patentanwälte**
**Steinsdorfstrasse 10**
**80538 München (DE)**

(54) **ACTUATOR CONTROL DEVICE AND WORKING MACHINE EQUIPPED WITH SAME**

(57)    Provided is an actuator control system capable of suppressing vibrations during regeneration. The actuator control system is provided with a target speed computing means (121) for computing a target rpm for the electric motor, a load sensing means (2) for sensing a load applied to an actuator, a torque instruction computing means (123) for computing a torque instruction for the electric motor based on the load, a current instruction computing means (131) for computing a vector instruction on a current, which is to be allowed to flow to the electric motor, from the torque instruction, a current sensing means (5a), a current conversion means (132) for converting a current to a current vector, a voltage instruction computing means (133) for computing a voltage vector instruction corresponding to a deviation between the current vector instruction and the current vector, and a voltage conversion means (134) for converting the voltage vector instruction to a voltage instruction, and further, outputting the voltage instruction to a control unit for the electric motor. The current conversion means and voltage conversion means perform the respective conversions based on the target rpm computed by the target speed computing means.

**EP 2 549 642 A1**

## FIG. 5

**Description**

**Technical Field**

This invention relates to an actuator control system, and specifically, is concerned with a control system suited for controlling an actuator to be driven by an electric motor.

**Background Art**

According to a technology that drives an actuator by an electric motor, the actuator during motoring is driven by a torque produced from the electric motor. During regeneration, on the other hand, the electric motor is driven by a reaction torque of the actuator, whereby the electric motor is allowed to operate as a generator to obtain regenerative electric power.

**Prior Art Documents**

**Patent Documents**

Patent Document 1: JP-A-2006-336846
Patent Document 2: JP-A-2006-336843

**Disclosure of the Invention**

**Problem to Be Solved by the Invention**

In such a technology that drives an actuator by an electric motor, the speed of the actuator is controlled by adjusting the torque of the electric motor relative to the reaction torque of the actuator. By variations in a load applied to the actuator, vibrations may hence occur on the actuator and electric motor. Further, vibrations are more prone to occur during regeneration than during motoring.

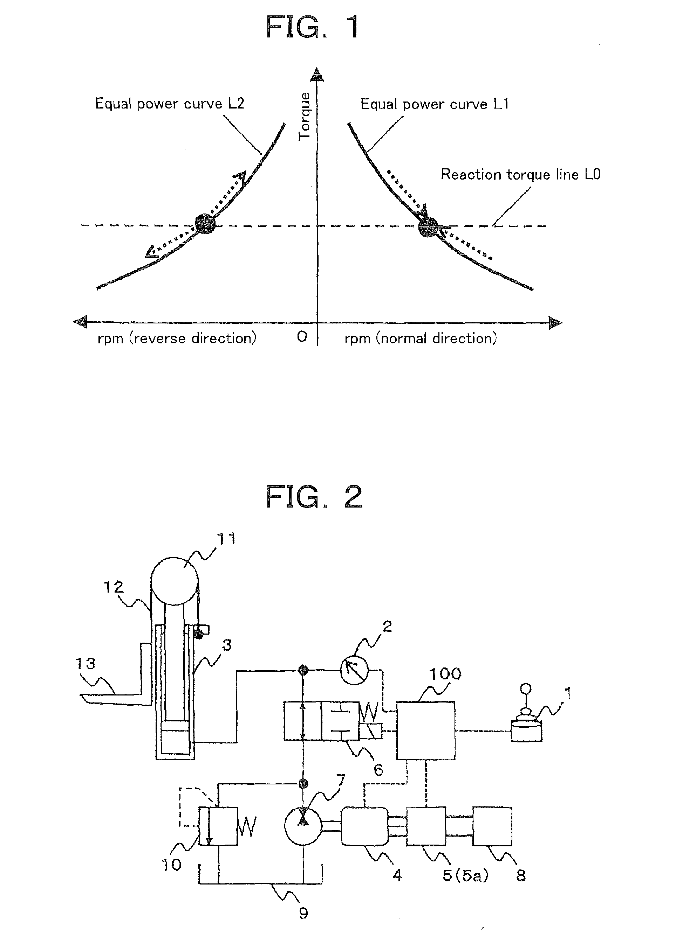

With reference to FIG. 1, a description will be made about a cause of the more prone occurrence of vibrations during regeneration. In the diagram, the abscissa represents the rpm of an electric motor, while the ordinate represents the torque of the electric motor. Equal power curves L1 and L2 indicate changes in the torque of the electric motor relative to the rpm of the motor when motoring and regeneration are performed, respectively, at constant power. Further, a straight line L0 in the diagram indicates a reaction torque. The operating point of the electric motor moves in a normal direction (rightward in the diagram) when the torque of the electric motor is greater than the reaction torque, but moves in a reverse direction (leftward in the diagram) when the torque of the electric motor is smaller than the reaction torque.

Consideration will now be made about a case in which during motoring in a right half of the diagram, the load applied to the actuator varies and the reaction torque becomes greater than the torque of the electric motor. As the operating point of the electric motor moves in the reverse direction, the torque of the electric motor naturally becomes greater on the equal power curve L1, and the torque of the electric motor and the reaction torque are balanced with each other so that the rpm of the electric motor becomes constant. It is, therefore, understood that the motor is a stable system during motoring.

Further consideration will be made about a case in which during regeneration in a left half of the diagram, on the other hand, the load applied to the actuator varies and the reaction torque becomes greater than the torque of the electric motor. As the operating point of the electric motor moves in the reverse direction, the torque of the electric motor becomes smaller on the equal power curve L2, and the operating point of the electric motor moves further in the reverse direction so that the rpm of the electric motor does not become constant. It is, therefore, understood that the motor is an unstable system during regeneration. Especially when the reaction torque is greater than the torque of the electric motor during regeneration, the operation of the electric motor becomes more unstable with the rpm of the electric motor, leading to the high possibility of occurrence of large vibrations. This may cause troubles of the electric motor and actuator, or may cause a problem from the standpoint of the safety of certain work when the work is being performed by driving the actuator. It is, thus, a very important issue to suppress vibrations during regeneration.

To suppress vibrations that occur on an actuator and electric motor, a hydraulic pressure circuit is disclosed, for example, in Patent Document 1. This hydraulic pressure circuit has a solenoid valve to control a flow rate such that the energy of return fluid from a hydraulic pressure actuator can be smoothly absorbed by an electric motor and the hydraulic pressure actuator can be stably operated. However, the hydraulic pressure circuit disclosed in Patent Document 1 is relatively large in pressure loss as the flow rate of return fluid is restricted by the solenoid valve, and therefore, is accompanied by a problem that regenerative electric power is decreased by the pressure loss.

On the other hand, the control system for a working machine as disclosed in Patent Document 2 has a control unit, which by variable displacement control of a variable displacement pump connected to a hydraulic pressure actuator via a closed circuit, performs at least speed control of the hydraulic pressure actuator and suppression control of variations in pressure and also performs approximate control of the rpm of the electric motor. However, the control system for the working machine as disclosed in Patent Document 2 requires an actuator for changing the displacement of the variable displacement pump, and therefore, is accompanied by a problem that its circuit becomes complex. Moreover, there ispossibilitythatpressure variations of the hydraulic pressure actuator cannot be suppressed if the cycle of variations in a load applied to the actuator is faster than the cycle of the variable displacement control of the variable displacement pump.

Objects of the present invention are, therefore, to provide an actuator control system capable of suppressing vibrations which may occur on an actuator and electric motor, especially vibrations during regeneration, and also a working machine provided with the same.

**Means for Solving the Problem**

To resolve the above-described problems, the present invention provides, in a first aspect thereof, an actuator control system for controlling an actuator to be driven by an electric motor, characterized by being provided with a target speed computing means for computing a target rpm for the electric motor based on an operating signal for the actuator, a load sensing means for sensing a load applied to the actuator, a torque instruction computing means for computing a torque instruction for the electric motor based on the load sensed by the load sensing means, a current instruction computing means for computing a vector instruction on a current, which is to be allowed to f low to the electricmotor, from the torque instruction, a current sensing means for sensing a 3-phase current flowing to the electric motor, a current conversion means for converting the 3-phase current, which has been sensed by the current sensing means, to a d-axis current and q-axis current (the d-axis current and q-axis current will hereinafter be called "the current vector"), a voltage instruction computing means for computing a voltage vector instruction corresponding to a deviation between the current vector instruction and the current vector, and a voltage conversion means for converting the voltage vector instruction to a voltage instruction, and further, outputting the voltage instruction to a control unit for the electric motor, wherein the current conversion means and voltage conversion means perform the respective conversions based on the target rpm computed by the target speed computing means.

The present invention is also characterized, in a second aspect thereof, in that in the invention described above, the torque instruction computing means computes the torque instruction for the electric motor by using a value, which has been obtained by smoothening the load sensed by the load sensing means, such that an amount of change in current for a momentary change in the load applied to the actuator becomes smaller than an amount of change in current for a constant change in the load applied to the actuator.

The present invention is also characterized, in a third aspect thereof, in that in the invention described above, the actuator control system is further provided with a motoring/regeneration determination means for determining, based on the load sensed by the load sensing means and the target rpm computed by the target speed computing means, whether an operation of the electric motor is motoring or regeneration, the current conversion means and voltage conversion means perform the respective conversions based on the target rpm computed by the target speed computing means when regeneration is determined by the motoring/regeneration determination means, but the current conversion means and voltage conversion means perform the respective conversions based on an actual rpm of the electric motor when motoring is determined by the motoring/regeneration determination means, the actuator control system is still further provided with an integration means for integrating the target rpm computed by the target speed computing means and the actual rpm of the electric motor, and the current conversion means and voltage conversion means perform the respective conversions based on a value integrated by the integration means.

The present invention is also characterized, in a fourth aspect thereof, in that in the invention described above, an induction motor is used as the electric motor.

The present invention is also characterized, in a fifth aspect thereof, in that in the invention described above, the torque instruction computing means computes the torque instruction with further reference to the target rpm computed by the target speed computing means.

The present invention is also characterized, in a sixth aspect thereof, in that in the invention described above, the torque instruction computing means computes the torque instruction by adding a torque, which corresponds to the amount of change in the load applied to the actuator, beforehand to a temporal average of torques corresponding to loads applied to the actuator.

The present invention also provides, in a seventh aspect thereof, a working machine provided with the actuator control system according to the above-described invention.

**Advantageous Effects of the Invention**

According to the present invention, the phase of a 3-phase voltage to be applied to the electric motor changes at an angular velocity corresponding to a target speed as the current conversion and voltage conversion are performed based on the target rpm. The electric motor, therefore, rotates in substantial synchronization with the rate of changes in the phase of the 3-phase voltage, in other words, the angular velocity corresponding to the target rpm, thereby making it possible to suppress vibrations of the electric motor and actuator. In addition, the computation of a torque instruction by smoothing loads to the actuator can also perform control such that the amount of change in current for a momentary change in the load applied to the actuator becomes smaller than the amount of change in current for a constant change in the load applied to the actuator, and therefore, can also suppress vibrations of the electric motor and actuator.

According to the present invention, the beforehand addition of a torque, which corresponds to the amount of change in load, to a temporal average of torques corresponding to loads provides the electric motor with a torque greater than the torque corresponding to each load, and therefore, can prevent a step-out of the electric motor.

**Brief Description of the Drawings**

FIG. 1 is a diagram showing a cause of more prone occurrence of vibrations during regeneration.

FIG. 2 is a diagram illustrating an actuator control system according to a first embodiment of the present invention.

FIG. 3 is an external view of a forklift truck provided with the actuator control system according to a first embodiment of the present invention.

FIG. 4 is a diagram for describing the construction of a controller shown in FIG. 2.

FIG. 5 is a diagram for describing the construction of a speed control unit shown in FIG. 4.

FIG. 6 is a diagram for describing the construction of a motor control unit shown in FIG. 4.

FIGS. 7(a) and 7(b) are diagrams for describing effects when an induction motor is used as an electric motor.

FIG. 8 is a diagram showing the results of PI control performed during lowering of forks.

FIG. 9 is a diagram showing the results of control described in connection with the first embodiment and performed during lowering of the forks.

FIG. 10 is a diagram showing the results of the control described in connection with the first embodiment and performed with momentary application of an external force during lowering of the forks.

FIG. 11 is a diagram illustrating an actuator control system according to a second embodiment of the present invention.

FIG. 12 is a diagram for describing the construction of a controller shown in FIG. 11.

FIG. 13 is a diagram for describing the construction of a speed control unit shown in FIG. 12.

FIG. 14 is a diagram illustrating an actuator control system according to a third embodiment of the present invention.

FIG. 15 is a diagram for describing the construction of a controller shown in FIG. 14.

FIG. 16 is a diagram for describing the construction of a speed control unit shown in FIG. 15.

FIG. 17 is a diagram illustrating an actuator control system according to a fourth embodiment of the present invention.

FIG. 18 is an external view of a battery-powered excavator provided with the actuator control system according to the fourth embodiment of the present invention.

**Modes for Carrying out the Invention**

FIG. 2 is a diagram for describing an actuator control system according to a first embodiment. A controller 100 as an actuator control system receives a lever signal corresponding to an amount of operation (stroke) of a lever 1 from an unillustrated potentiometer attached to the lever 1, receives a pressure signal corresponding to a pressure of a hydraulic cylinder (actuator) 3 from a pressure sensor (load sensing means) 2, receives an rpm of an electric motor 4 from an unillustrated encoder attached to the electric motor 4, and receives a 3-phase current from a current sensor (current sensing means) 5a which an inverter 5 has.

The controller 100 computes a 3-phase voltage instruction and holding release signal based on the received lever signal, pressure signal, rpm and 3-phase current, transmits the 3-phase voltage instruction to the inverter 5, and transmits the holding release signal to a solenoid selector valve 6. Details of the computations to be performed at the controller 100 will be described subsequently herein. On the other hand, the inverter 5 applies a voltage to the electric motor 4 responsive to the 3-phase voltage instruction, and drives the electric motor 4. The solenoid selector valve 6 is normally closed, but opens responsive to the holding release signal (in other words, when the holding release signal is ON) to communicate a hydraulic pump motor 7 and the hydraulic cylinder 3 with each other.

When the lever 1 is operated to a lifting side, the inverter 5 consumes the electric power of an electric storage device 8 to allow the electric motor 4 to run in a normal direction. The hydraulic pump motor 7 is connected to the electric motor 4, and its normal rotation draws up oil from an oil reservoir 9 and delivers it to the side of the hydraulic cylinder 3. It is to be noted that a relief valve 10 is arranged between the hydraulic pump motor 7 and the solenoid selector valve 6 to prevent the delivery pressure of the hydraulic pump motor 7 from exceeding the withstand pressure of piping.

The hydraulic cylinder 3 is allowed to extend by oil supplied from the hydraulic pump motor 7 to raise an unillustrated inner mast frame along an unillustrated outer mast frame. The inner mast frame is provided at an upper part thereof with a running block 11. Upon movement of the running block 11 together with the inner mast frame, forks 13 arranged at free ends of lift chains 12 wrapped around the running block 11 move upward via the lift chains 12.

When the lever 1 is controlled to a lowering side, the forks 13 move downward by its own weight and load and compress the hydraulic cylinder 3 via the lift chains 12, running block 11 and inner mast frame. When compressed, the hydraulic cylinder 3 delivers oil, and supplies it to the hydraulic pump motor 7 via the solenoid selector valve 6. With the oil so supplied, the hydraulic pump motor 7 performs motor operation to reverse the electric motor 4. At this time, the inverter 5 regeneratively controls the electric motor 4, and supplies the generative electric power to the electric storage device 8.

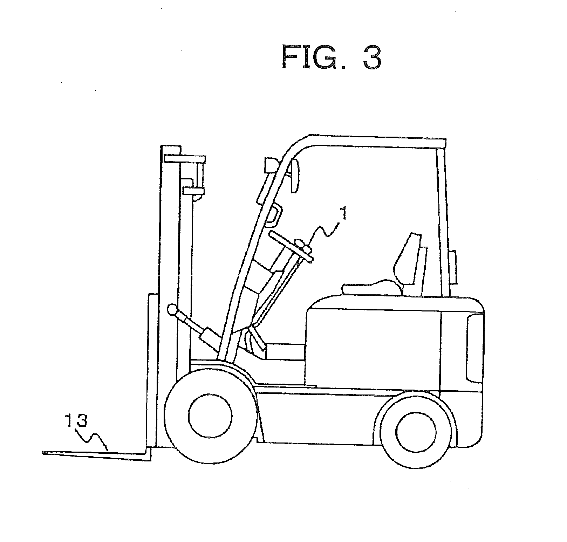

An external view of the forklift truck (working machine) provided with the actuator control system described with reference to FIG. 2 is shown in FIG. 3. An operator operates the lever 1 to allow unillustrated hydraulic cylinders to extend or retract along the outer mast frame, whereby the forks 13 can be moved upward or downward.

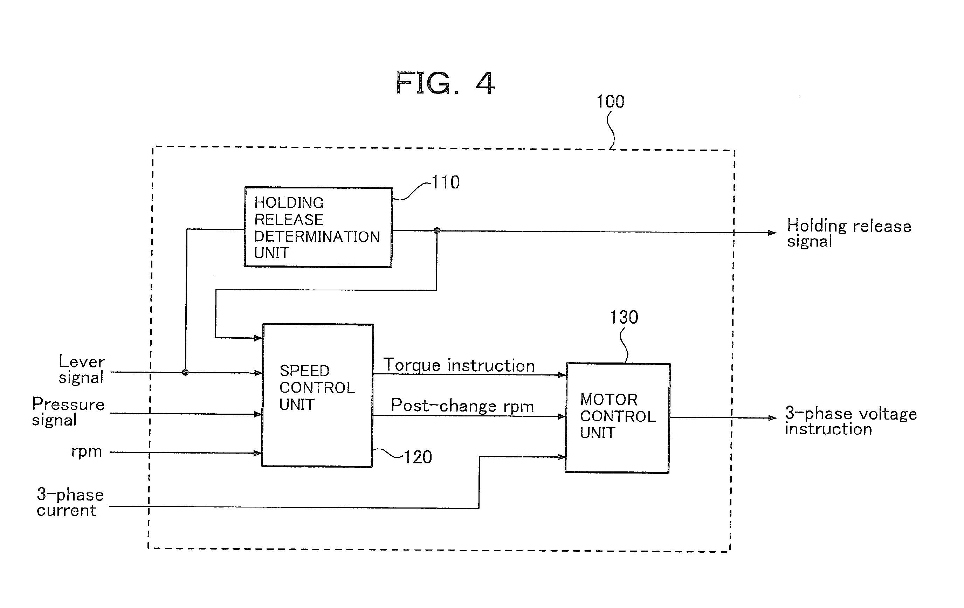

The construction of the controller (actuator control system) 100 is illustrated in FIG. 4. The controller 100 is constructed of a holding release determination unit 110, a speed control unit 120, and a motor control unit 130. The holding release determination unit 110 turns on a holding release signal when a lever signal has an absolute value equal to or greater than a preset threshold level and lasts a given length of time $T_1$, but turns off the holding release signal when the absolute value of the lever signal becomes smaller than the preset threshold level. It is to be noted that the given length of time $T_1$ is set beforehand in view of a time until pressures before and after the solenoid selector valve 6 balance each other. Therefore, the given length of time $T_1$ may be set corresponding to a pressure signal such that it becomes greater as the pressure signal increases, or may be set such that it becomes smaller as the rpm of the electric motor 4 becomes higher. As an alternative, it may also be configured such that a means is additionally arranged to sense or estimate a pressure between the hydraulic pump motor 7 and the solenoid selector valve 6 and the holding release signal may be turned on when the pressures before and after the solenoid selector valve 6 become substantially equal to each other.

The speed control unit 120 computes a torque instruction and an rpm, to which the rpm of the motor is to be controlled (hereinafter simply called "post-change rpm"), based on the holding release signal, lever signal, pressure signal and rpm, and outputs them. Details of the computations to be performed at the speed control unit 120 will be described subsequently herein. On the other hand, the motor control unit 130 computes a 3-phase voltage instruction based on the torque instruction, post-change rpm and 3-phase current, and outputs it. Details of the computation to be performed at the motor control unit 130 will also be described subsequently herein.

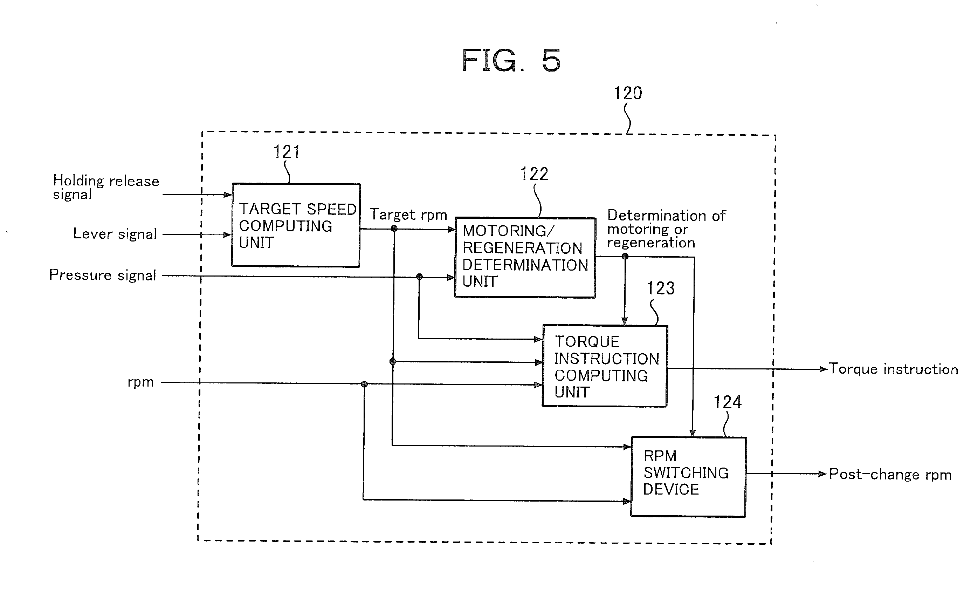

The construction of the speed control unit 120 is illustrated in FIG. 5. The speed control unit 120 is constructed of a target speed computing unit (target speed computing means) 121, a motoring/regeneration determination means 122, a torque instruction computing unit (torque instruction computing means) 123, and an rpm switching device 124.

The target speed computing unit 121 computes a target rpm $n_t$ based on a holding release signal $v_v$ and lever signal $v_l$ from equation (1).

$$ n_t = \begin{cases} K_1 v_l & (v_v = \mathrm{ON}) \\ K_0 |v_l| & (v_v = \mathrm{OFF}) \end{cases} \qquad (1) $$

where $K_1$ is a proportional constant set beforehand such that an adequate fork speed can be obtained for a lever stroke, and $K_0$ is a proportional constant relating to a pressurization rate for the hydraulic pump motor 7 and is set beforehand such that the forks operate with a delay in an adequate range relative to a lever operation. It can also be considered that, although the target speed computing unit 121 computes the target rpm $n_t$ for the electric motor 4 as described above, the computation of the target rpm $n_t$ for the electric motor 4 is determined based on the target speed for the hydraulic cylinder 3 as an actuator because of the use of the proportional constant $K_1$ or $K_0$ for the computation of the target rpm $n_t$ as is evident from equation (1).

From equation (1) described above, the target rpm $n_t$ is set in a direction corresponding to the sign of the lever signal $v_l$ when the holding release signal $v_v$ is ON, but the target rpm $n_t$ is set in a normal direction irrespective of the sign of the lever signal $v_l$ when the holding release signal $v_v$ is OFF. Therefore, the pressure between the hydraulic pump motor 7 and the solenoid selector valve 6 becomes gradually higher when the lever signal $v_l$ is input and the holding

release signal $v_v$ is OFF. It is to be noted that a value obtained by subjecting the target rpm $n_t$ in equation (1) to a low-pass filter or rate limiter may be used newly as a target rpm $n_t$ to avoid any sudden change in fork speed which may be caused by an abrupt change in the target rpm $n_t$ when the holding release signal $v_v$ changes from OFF to ON.

The motoring/regeneration determination unit 122 computes a motoring/regeneration determination $f_d$ based on the target rpm $n_t$ and a pressure signal $p_c$ from equation (2).

$$f_d = \text{sign}\left\{(p_c - p_t) \cdot n_t\right\} \qquad (2)$$

where "sign" is a sign function, and extracts 1 when the parameter is positive, -1 when the parameter is negative and 0 when the parameter is 0. $p_t$ represents the pressure in the oil reservoir 9, and is set at atmospheric pressure. The motoring/regeneration determination $f_d$ indicates motoring when it is 1 or 0, but indicates regeneration when it is -1.

The torque instruction computing unit 123 computes a torque instruction $T_t$ based on the pressure signal $p_c$, the target rpm $n_t$ and an rpm $n_m$ from equation (3) or equation (4). It is to be noted that depending on the motoring/regeneration determination $f_d$, equation (3) is used during motoring but equation (4) is used during regeneration.

$$T_t = D_p p_c + \left(K_p + K_i \frac{1}{s}\right)(n_t - n_m) \quad (f_d \geq 0) \qquad (3)$$

$$T_t = D_p \frac{1}{\tau_1 s + 1} p_c + K_c n_t + T_v \quad (f_d < 0) \qquad (4)$$

where $D_p$ represents a displacement of the hydraulic pump motor 7 per unit angle, and the first item of the right side in equation (3) corresponds to a reaction torque of the hydraulic pump motor 7 during the rest of the forks. s is the Laplace operator. $K_p$ and $K_i$ represent a known proportional gain and integration gain for known PI control, respectively, and are set at appropriate values beforehand. Further, $K_c$ is a feed forward gain for a target rpm, and is set beforehand at an appropriate value such that the second item of the right side in equation (4) becomes a torque corresponding to a pressure loss at the solenoid selector valve 6. $\tau_1$ is a time constant, and is set beforehand at an appropriate value such that a pressure signal can be smoothened.

Furthermore, $T_v$ is a variation absorbing torque, and is set beforehand at an appropriate value such that the electric motor 4 does not step out even when the reaction torque of the hydraulic pump motor 7 temporarily varies due to a variation in fork speed. Described specifically, the torque instruction computing unit 123 computes the torque instruction $T_t$ by adding a torque, which corresponds to a variation in a load applied to the hydraulic cylinder 3, beforehand to the temporal average of torques corresponding to loads applied to the hydraulic cylinder 3.

Depending on the motoring/regeneration determination $f_d$, the rpm switching device 124 outputs, as a post-change rpm, the rpm $n_m$ during motoring but the target rpm $n_t$ during regeneration.

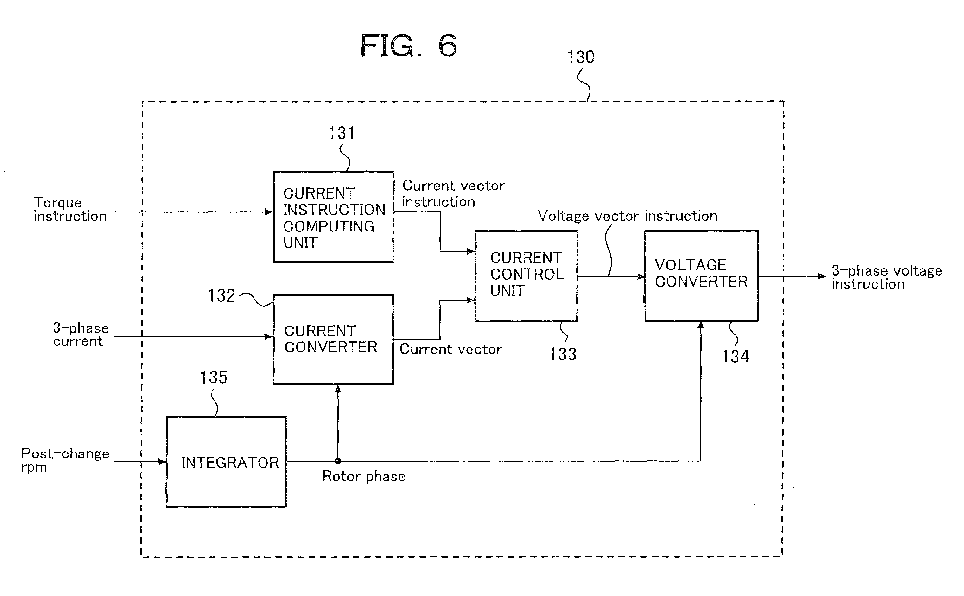

The construction of the motor control unit 130 is illustrated in FIG. 6. The motor control unit 130 is constructed of a current instruction computing unit (current instruction computing means) 131, a current converter (current conversion means) 132, a current control unit (voltage instruction computing means) 133, a voltage converter (voltage conversion means) 134, and an integrator (integration means) 135. The integrator 135 converts an angle, which has been obtained by integrating the post-change rpm, to an equivalent value of from 0 to $2\pi$, and outputs it as a rotator phase $\phi_m$. At the current instruction computing unit 131, a current vector instruction $(i_{dt}, i_{qt})^T$ is computed based on the torque instruction $T_t$ from a preset torque-current conversion map. The superscript T represents a transposition. It is to be noted that through experiments or the like, the torque-current conversion map is set beforehand as a map of current vector instructions $(i_{dt}, i_{qt})^T$ that makes it possible to obtain a desired torque with high efficiency.

While using the rotator phase $\phi_m$, the current converter 132 performs a known 3-phase to 2-phase conversion and known dq conversion based on a detected 3-phase current $(i_u, i_v, i_w)$ from equation (5) to compute and output a current vector $(i_d, i_q)^T$.

$$\begin{bmatrix} i_d \\ i_q \end{bmatrix} = \begin{bmatrix} \cos\phi_m & \sin\phi_m \\ -\sin\phi_m & \cos\phi_m \end{bmatrix} \sqrt{\frac{2}{3}} \begin{bmatrix} \cos 0 & \cos\frac{2}{3}\pi & \cos\frac{4}{3}\pi \\ \sin 0 & \sin\frac{2}{3}\pi & \sin\frac{4}{3}\pi \end{bmatrix} \begin{bmatrix} i_u \\ i_v \\ i_w \end{bmatrix} \qquad (5)$$

The current control unit 133 computes a voltage vector instruction $(v_{dt}, v_{qt})^T$ by known PI control or the like such that the current vector $(i_d, i_q)^T$ coincides with the current vector instruction $(i_{dt}, i_{qt})^T$.

While using the rotator phase $\phi_m$, the voltage converter 134 performs a known dq conversion and known 2-phase to 3-phase conversion based on the voltage vector instruction $(v_{dt}, v_{qt})^T$ from equation (6) to compute and output a 3-phase voltage instruction $(v_u, v_v, v_w)^T$.

$$\begin{bmatrix} v_{ut} \\ v_{vt} \\ v_{wt} \end{bmatrix} = \sqrt{\frac{2}{3}} \begin{bmatrix} \cos 0 & \sin 0 \\ \cos\frac{2}{3}\pi & \sin\frac{2}{3}\pi \\ \cos\frac{4}{3}\pi & \sin\frac{4}{3}\pi \end{bmatrix} \begin{bmatrix} \cos\phi_m & -\sin\phi_m \\ \sin\phi_m & \cos\phi_m \end{bmatrix} \begin{bmatrix} i_{dt} \\ i_{qt} \end{bmatrix} \qquad (6)$$

As has been described above, the motor control unit 130 computes a 3-phase voltage instruction from a torque instruction and 3-phase current, and the phase of the 3-phase voltage instruction changes corresponding to a post-change rpm delivered from the speed control unit 120. When a target rpm is set as a post-change rpm upon regeneration, the phase of the 3-phase voltage instruction changes at an angular velocity corresponding to the target rpm. Therefore, the electric motor 4 rotates in substantial synchronization with the rate of the change in the phase of the 3-phase voltage instruction, that is, the target rpm.

At this time, a torque instruction is computed at the torque instruction computing unit 123 in the speed control unit 120 such that the torque of the electric motor 4 becomes equal to or greater than the reaction torque of the hydraulic pump motor 7. Described in more detail, the torque instruction $T_t$ is computed by adding the variation absorbing torque $T_v$ as a positive value as indicated by equation (4). As a consequence, the electric motor 4 can be prevented from a step-out. It is to be noted that the use of an induction motor as the electric motor 4 can make the value of the variation absorbing torque $T_v$ smaller compared with the use of a synchronous motor as the electric motor 4.

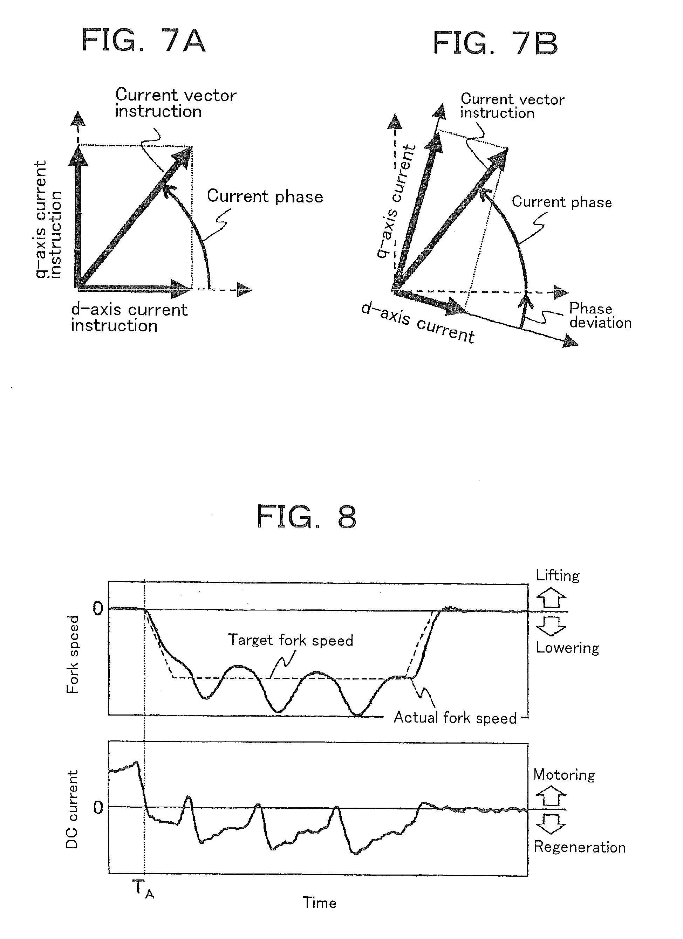

Referring next to FIGS. 7(a) and 7(b), a description will be made of effects available when an induction motor is used as the electric motor 4 and the target rpm $n_t$ is set as a post-change rpm. Axes indicated by dashed lines in FIG. 7(a) are fixed on rotator phases (hereinafter called "target rotator phases") obtained by integrating the target rpm $n_t$, and define a target rotator coordinate system. The current vector instruction is a vector having a certain current phase with respect to the d-axis (the axis in the direction of a magnetic flux) in the target rotator coordinate system and located in the first quadrant, and the d-axis current instruction and q-axis current instruction in the diagram correspond to $i_{dt}$ and $i_{qt}$ of the current vector instruction, respectively. Further, it is known that the torque $T_m$ of the electric motor 4 is determined based on the current vector by equation (7).

$$T_m = P_f \cdot \frac{M}{L_2} \cdot \psi(i_d) \cdot i_q \qquad (7)$$

where $P_f$ is the number of pole pairs, M is a mutual inductance, and $L_2$ is the inductance of a secondary wiring.

Further, $\psi$ is a magnetic flux and is determined based on the d-axis current by formula (8).

$$\psi = \frac{M}{1 + \dfrac{L_2}{r_2}s} i_d \qquad (8)$$

where $r_2$ is the resistance of the secondary wiring.

Consideration will now be made on a case in which the reaction torque of the hydraulic pump motor 7 temporarily varied and an actual rotator coordinate system has shifted by the deviation in phase from the target rotator coordinate system as indicated by solid lines in FIG. 7(b). A current vector instruction is given as a vector that has a current phase with respect to the target rotator coordinate system as a reference, but an actual d-axis current $i_d$ and q-axis current iq increase or decrease by the deviation in phase than the values of the instruction because an actual current vector is formed based on the actual rotator coordinate system as a reference. If the actual rotator phase delays than the target rotator phase, the d-axis current $i_d$ decreases and the q-axis current iq increases. If the actual rotator phase advances than the target rotator phase, on the other hand, the d-axis current $i_d$ increases and the q-axis current iq decreases.

Because the flux $\psi$ changes at this time with a lag from the change in the d-axis current $i_d$ as indicated by equation (8), the flux $\psi$ does not change momentarily and as indicated by equation (7), the torque $T_m$ of the electric motor 4 is increased or decreased by the change in the q-axis current $i_q$. When the actual rotator phase delays than the target rotator phase, for example, as indicated in FIG. 7(b), the q-axis current $i_q$ increases. This increase in the value of the q-axis current iq leads to an increase in the torque $T_m$ of the electric motor 4 as readily envisaged from equation (7). Under the action of the increased torque $T_m$, the actual rotator phase advances counterclockwise from the center of the coordinate system in FIG. 7(b) and coincides with the target rotator phase.

Owing to this effect, the torque $T_m$ of the electric motor 4 is automatically adjusted in such a direction that the target rotator phase and actual rotator phase coincide with each other. Even if the reaction torque of the hydraulic pump motor 7 varies temporarily, variations of the electric motor 4 can be suppressed by making the rpm $n_m$ of the electric motor 4 and the target rpm $n_t$ coincide with each other.

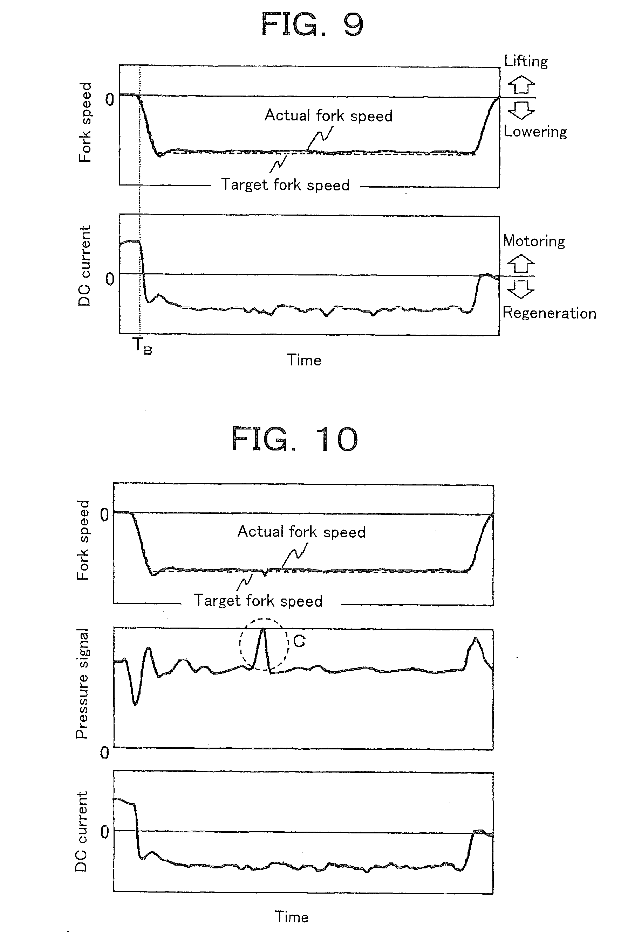

The results of PI control exemplified as a control method upon lowering of the forks during motoring are shown in FIG. 8, and the results obtained by the performance of the control, which has been described in this embodiment, upon lowering of the forks during motoring are shown in FIG. 9. Referring to FIG. 8, the lowering of the forks began at a time $T_A$, and the actual fork speed was negative. However, the actual fork speed did not coincide with the target fork speed, and was fluctuant. It is to be noted that as the target fork speed, one separately calculated based on the target rpm is shown. Further, a DC current as a DC-side current of the inverter 5 was set to be also fluctuant such that the torque instruction for the electric motor 4 was increased or decreased to make the actual fork speed and the target fork speed coincide with each other. These fluctuant fork speed and DC current are considered to be attributable to inappropriate setting of the gains for the PI control. It is, however, difficult to set the gains for the PI control appropriately for all conditions because the response characteristics of the fork speed to the torque of the electric motor significantly change corresponding to the mass of a load, the lifting height, the temperature of oil, and the like.

With reference to FIG. 9, on the other hand, the actual fork speed was substantially coincident with the target fork speed from the beginning of lowering of the forks at a time $T_B$ until their stoppage, so that a stable fork speed was obtained. Further, the DC current was also stable because the torque instruction remained substantially constant relative to the target fork speed.

The results obtained by performing the control, which has been described in this embodiment, with momentary application of an external force to a load at an intermediate time point during lowering of the forks are shown in FIG. 10. In a circle C defined by a dashed line in the figure, the external force was applied to the load and the pressure signal became large momentarily. However, owing to the computation of a torque instruction at the torque instruction computing unit by the use of a value obtained by smoothening a pressure signal, the torque instruction remained substantially unchanged and the DC current also remained substantially unchanged. In addition, when a variation absorbing torque is set beforehand for variations in the reaction torque of the hydraulic pump motor 7 and an induction motor is used as the electric motor 4, the torque of the electric motor 4 is automatically adjusted by the above-mentioned effects. A stable fork speed was hence obtained.

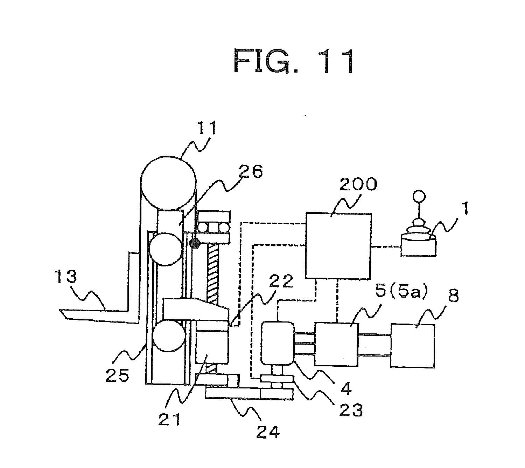

Next, FIG. 11 is a diagram illustrating an actuator control system according to a second embodiment. In the second embodiment, a mechanical actuator 21 is used in place of the hydraulic cylinder employed in the first embodiment. Similar parts as in the first embodiment will hereinafter be designated by similar signs, and their detailed description is omitted herein. A controller (actuator control system) 200 receives a lever signal corresponding to a stroke of a lever 1 from an unillustrated potentiometer attached to the lever 1, receives a load signal corresponding to a load on a mechanical actuator 21 from a load cell (load sensing means) 22, receives an rpm of an electric motor 4 from an unillustrated encoder attached to the electric motor 4, and also receives a 3-phase current from a current sensor 5a which an inverter 5 has. It is to be noted that the mechanical actuator 21 can be a known ball screw, and practically, can be any mechanism insofar as it can translate rotational motion to linear motion.

The controller 200 computes a 3-phase voltage instruction and holding release signal based on the received lever signal, load signal, rpm and 3-phase current, transmits the 3-phase voltage instruction to the inverter 5, and transmits the holding release signal to a holding mechanism 23. It is to be noted that the holding mechanism 23 may be, for example, a friction brake and may be built in the electric motor 4. Details of the computations to be performed at the controller 200 will be described subsequently herein. On the other hand, the inverter 5 applies a voltage to the electric motor 4 responsive to the 3-phase voltage instruction, and drives the electric motor 4. The holding mechanism 23 is normally in a holding state, but releases the holding responsive to the holding release signal (when the holding release signal becomes ON) to transmit the power of the electric motor 4 to the mechanical actuator 21 via a gear mechanism 24.

When the lever 1 is operated to the lifting side, the inverter 5 consumes the electric power of the electric storage device 8 to allow the electric motor 4 to run in the normal direction. The gear mechanism 24 is connected to the electric motor 4, and its normal rotation transmits the power of the motor 4 to the mechanical actuator 21. The mechanical actuator 21 is allowed to extend by the power transmitted from the electric motor 4 via the gear mechanism 24, and raises an inner mast frame 26 along an outer mast frame 25. The inner mast frame 26 is provided at an upper part thereof with a running block 11. Upon movement of the running block 11 together with the inner mast frame 26, forks 13 arranged at the free ends of lift chains 12 wrapped around the running block 11 move upward via the lift chains 12.

When the lever 1 is operated to the lowering side, the forks 13 move downward by its own weight and load and press the mechanical actuator 21 downward via the lift chains 12, running block 11 and inner mast frame 26. When pressed downward, the mechanical actuator 21 produces power that can reverse the gear mechanism 24. The power so produced is transmitted to the electric motor 4 via the gear mechanism 24. At this time, the inverter 5 regeneratively controls the electric motor 4, and supplies electric power to an electric storage device 8.

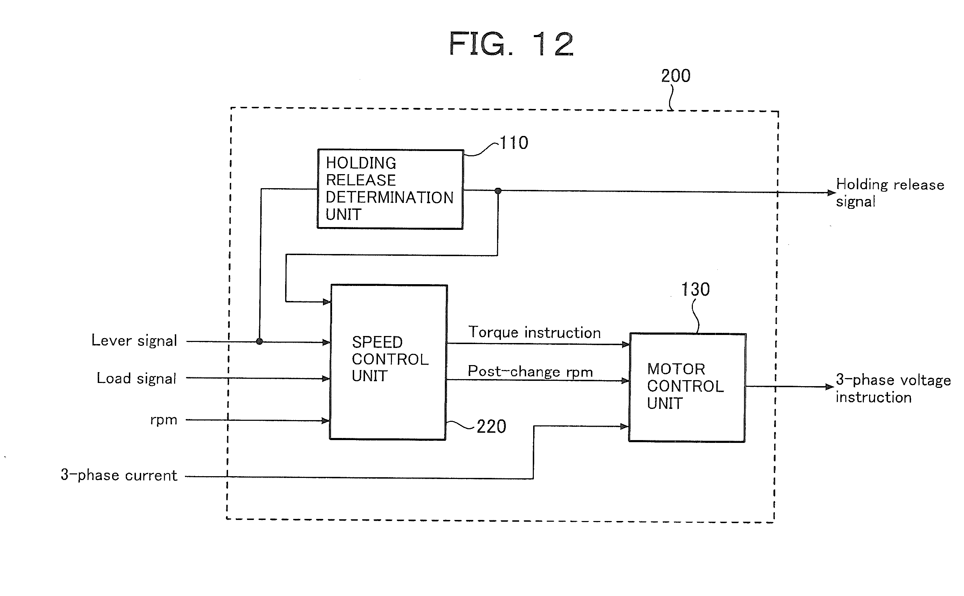

The construction of the controller 200 is illustrated in FIG. 12. The controller 200 is constructed of a holding release determination unit 110, a speed control unit 220, and a motor control unit 130. The computations to be performed at the controller 200 are the same as those performed at a controller 100 as described in connection with the first embodiment except for the substitution of a pressure signal for the load signal, and therefore, a description will be made of different features only.

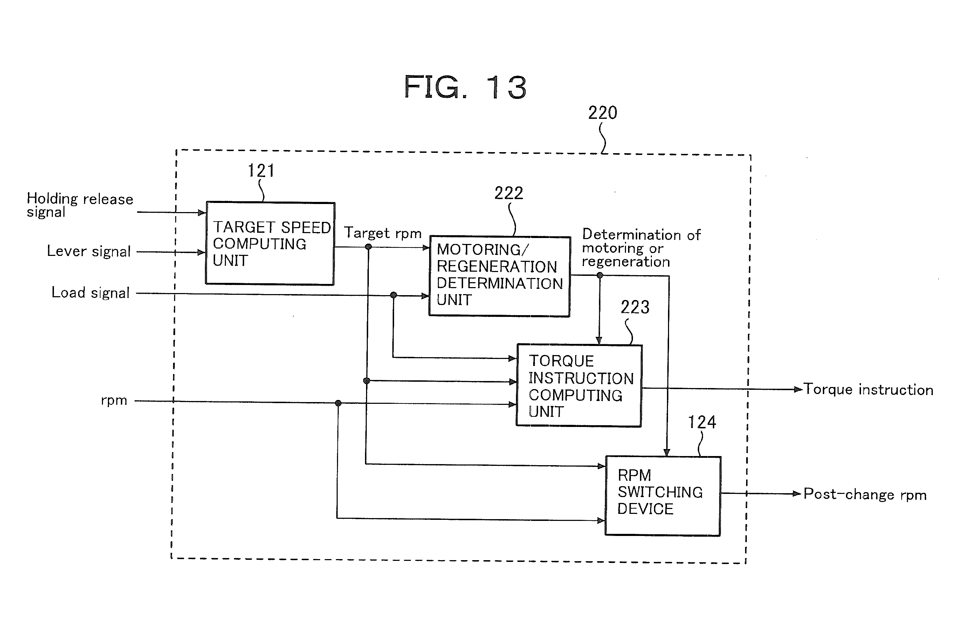

The construction of the speed control unit 220 is illustrated in FIG. 13. The speed control unit 220 is constructed of a target speed computing unit 121, a motoring/regeneration determination means 222, a torque instruction computing unit (torque instruction computing means) 223, and an rpm switching device 124. A motoring/regeneration determination unit 222 computes a motoring/regeneration determination $f_d$ based on a target rpm $n_t$ and a load signal $f_c$ from equation (9).

$$f_d = \mathrm{sign}(f_c \cdot n_t) \qquad (9)$$

The torque instruction computing unit 223 computes a torque instruction $T_t$ based on the load signal $f_c$, the target rpm $n_t$ and an rpm $n_m$ from equation (10) or equation (11). It is to be noted that depending on the motoring/regeneration determination $f_d$, equation (10) is used during motoring but equation (11) is used during regeneration.

$$T_t = R_r f_c + \left( K_p + K_i \frac{1}{s} \right)(n_t - n_m) \quad (f_d \geq 0) \qquad (10)$$

$$T_t = R_r \frac{1}{\tau_1 s + 1} f_c + K_{c2} n_t + T_v \quad (f_d < 0) \qquad (11)$$

where $R_r$ is a proportional constant and is calculated beforehand from the reduction ratio of the gear mechanism and the lead of the mechanical actuator 21. Similar to equation (3), the first item of the right side in equation (10) corresponds to a reaction torque applied to the electric motor 4 during the rest of the forks. $K_{c2}$ is a feed forward gain for a target rpm, and is set beforehand at an appropriate value such that the second item of the right side in equation (11) becomes a torque corresponding to a pressure loss at the gear mechanism 24 and mechanical actuator 21.

Owing to the construction described above, a stable fork speed can also be obtained in the second embodiment that makes use of the mechanical actuator 21.

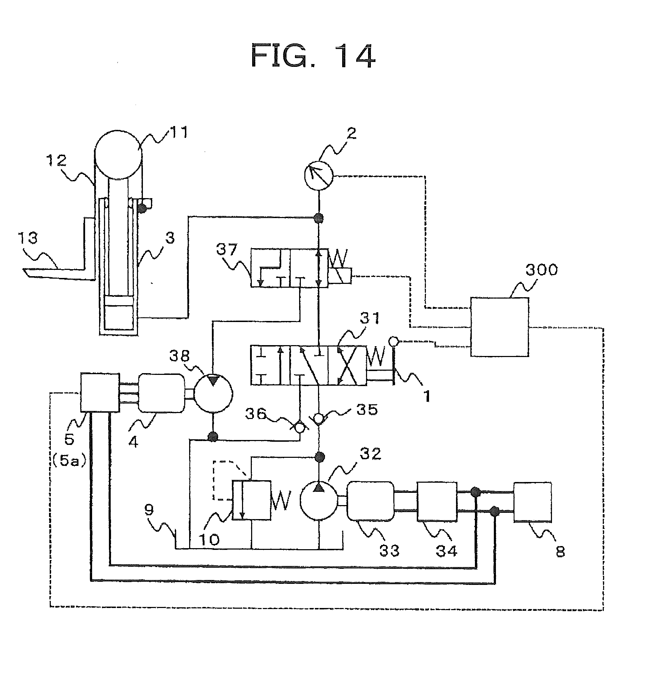

Next, FIG. 14 is a diagram illustrating an actuator control system according to a third embodiment. The third embodiment is an embodiment of the present invention as applied to a working machine provided with a hydraulic actuator by limiting changes to a conventional hydraulic circuit. Similar parts as in the first embodiment will hereinafter be designated by similar signs, and their detailed description is omitted herein.

When a lever 1 is operated to a lifting side (rightward in the figure), a hydraulic pump 32 and a hydraulic cylinder 3 are communicated with each other via a control valve 31 mechanically connected to the lever 1. The hydraulic pump motor 32 is connected to an electric motor 33, and its normal rotation draws up oil from an oil reservoir 9 and delivers it to the side of the hydraulic cylinder 3. The flow rate of the oil to be supplied to the hydraulic cylinder 3 can be adjusted by the opening degree of the control valve 31, in other words, the stroke of the lever 1.

An unillustrated chopper switch is attached to the lever 1. When the lever 1 is operated to the lifting side, the chopper switch is turned on so that a chopper 34 consumes the electric power of an electric storage device 8 to allow the electric motor 33 to run in a normal direction. Although an ON/OFF chopper switch is employed as the chopper switch in this embodiment, a linear chopper switch may also be employed such that the voltage to be applied by the chopper 34 to the electric motor 33 increases corresponding to the stroke of the lever 1. It is to be noted that between the control valve 31 and the hydraulic pump 32, a check valve 35 is arranged to prevent the oil from flowing backward.

When the lever 1 is operated to a lowering side, on the other hand, the hydraulic cylinder 3 and oil reservoir 9 are communicated with each other via the control valve 31 mechanically connected to the lever 1, and the oil delivered from the hydraulic cylinder 3 flows back to the oil reservoir 9 via the control valve 3. The flow rate of the oil that flows back from the hydraulic cylinder 3 to the oil reservoir 9 can be adjusted by the opening degree of the control valve 31, in other words, the stroke of the lever 1. It is to be noted that between the control valve 31 and the oil reservoir 9, a check valve 36 is arranged to prevent the oil from flowing backward. The foregoing is an illustrative conventional hydraulic circuit construction.

In the third embodiment, a solenoid selector valve 37 is arranged between the hydraulic cylinder 3 and the control valve 31. The solenoid selector valve 37 normally communicates the hydraulic cylinder 3 and the control valve 31 with each other. Upon operation of the lever 1 to the lowering side, however, the solenoid selector valve 37, responsive to a regeneration signal outputted from a controller (actuator control system) 300, communicates the hydraulic cylinder 3 and a hydraulic motor 38 with each other when the regeneration signal is ON. The hydraulic motor 38 is connected to an electric motor 4, and with the oil supplied from the hydraulic cylinder 3, operates as a motor to rotate the electric motor 4.

At this time, the controller 300 receives a lever signal corresponding to a stroke of the lever 1 from an unillustrated potentiometer attached to the lever 1, receives a pressure signal corresponding to a pressure of the hydraulic cylinder 3 from a pressure sensor 2, receives a 3-phase current from a current sensor 5a which an inverter 5 has, and also receives a regeneration permitting signal from an unillustrated regeneration permitting switch. The controller 300 computes a 3-phase voltage instruction and regeneration signal based on the received lever signal, pressure signal, 3-phase current and regeneration permitting signal, transmits the 3-phase voltage instruction to the inverter 5, and transmits the regeneration signal to the solenoid selector valve 37. Details of the computations to be performed at the controller 300 will be described subsequently herein. The inverter 5 regeneratively controls the electric motor 4 responsive to the 3-phase voltage instruction, and supplies the regenerative electric power to the electric storage device 8.

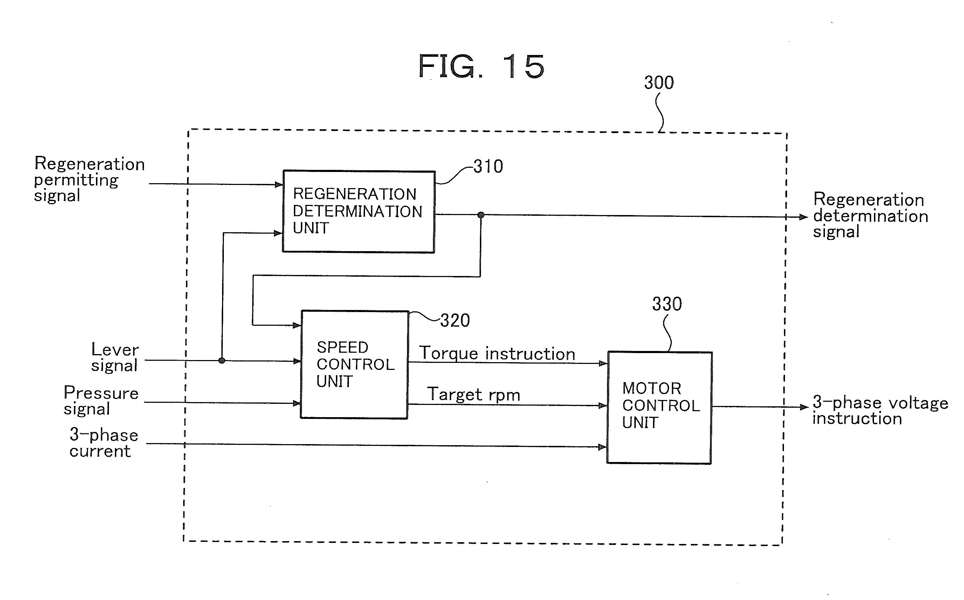

The construction of the controller 300 is illustrated in FIG. 15. The controller 300 is constructed of a regeneration determination unit 310, a speed control unit 320, and a motor control unit 330. The regeneration determination unit 310 turns on a regeneration determination signal when the regeneration permitting signal is ON and the absolute value of the lever signal is equal to or greater than apreset threshold level, but turns off the regeneration determination signal when the regeneration permitting signal is OFF or the absolute value of the lever signal is smaller than the preset threshold level.

The speed control unit 320 computes a torque instruction and a target rpm based on the regeneration determination signal, lever signal and pressure signal, and outputs them. Details of the computations to be performed at the speed control unit 320 will be described subsequently herein. On the other hand, the motor control unit 330 computes a 3-phase voltage instruction based on the torque instruction, target rpm and 3-phase current, and outputs it. The computation to be performed at the motor control unit 330 is the same as that at the motor control unit 130 as described in connection with the first embodiment, and therefore, its detailed description is omitted herein.

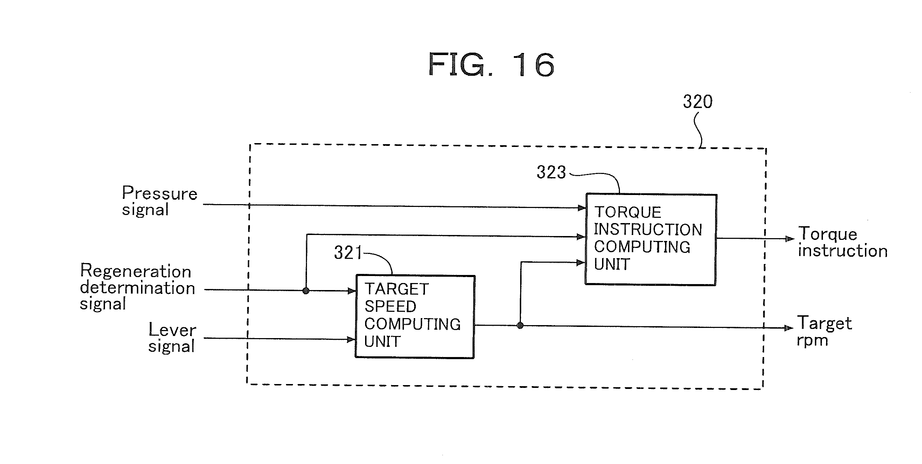

The construction of the speed control unit 320 is illustrated in FIG. 16. The speed control unit 320 is constructed of a target speed computing unit (target speed computing means) 321 and a torque instruction computing unit (torque instruction computing means) 323. The target speed computing unit 321 computes a target rpm $n_t$ based on a regeneration determination signal $v_v$ and lever signal $v_l$ from equation (12).

$$n_t = \begin{cases} K_1 v_l & (v_v = \text{ON}) \\ 0 & (v_v = \text{OFF}) \end{cases} \qquad (12)$$

where $K_l$ is a proportional constant set beforehand such that an adequate fork lowering speed can be obtained for a lever stroke.

The torque instruction computing unit 323 computes a torque instruction $T_t$ based on the pressure signal $p_c$ and the target rpm $n_t$ from equation (4) described in connection with the first embodiment.

Owing to the construction described above, a stable actuator speed can be obtained during regeneration in the third embodiment in which the present invention is applied to the working machine provided with the hydraulic actuator by limiting changes to the conventional hydraulic circuit.

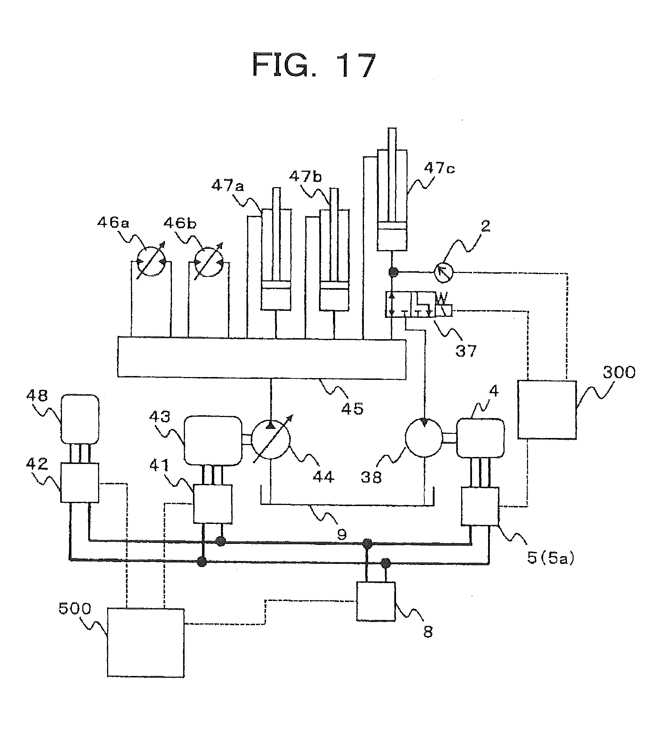

FIG. 17 is a diagram illustrating an actuator control system according to a fourth embodiment. The fourth embodiment is an embodiment of the present invention as applied to a battery-powered excavator (working machine). As the fourth embodiment is similar to the third embodiment except that the present invention is applied to the battery-powered excavator, similar parts as in the third embodiment will be designated by similar signs, and their description is omitted herein.

A main controller 500 receives an operator' operating signal from an unillustrated lever, an unillustrated pedal or the like and receives a voltage signal from an unillustrated voltage sensor which the electric storage device 8 has, computes a pump rpm instruction and swing speed instruction based on these signals, and transmits the pump rpm instruction to an inverter 41 for pump (pump inverter 41) and the swing speed instruction to an inverter 42 for swing operations (swing inverter 42). As the computations to be performed at the main controller 500 are not relevant directly to the present invention, their detailed description is omitted herein.

The pump inverter 41 drives an electric motor 43 for pump (electric pump motor 43) responsive to the pump rpm instruction. A hydraulic pump 44 is connected directly to the electric pump motor 43, and its normal rotation draws up oil from the oil reservoir 9 and delivers the oil to a left travel hydraulic motor 46a, right travel hydraulic motor 46b, bucket cylinder 47a, arm cylinder 47b and boom cylinder 47c via a control valve 45.

The control valve 45 is connected to the unillustrated lever, unillustrated pedal or the like via an unillustrated hydraulic circuit, and response to an operator's operation, distributes the oil to the left travel hydraulic motor 46a, right travel hydraulic motor 46b, bucket cylinder 47a, arm cylinder 47b or boom cylinder 47c. As the operation of the control valve 45 is not relevant directly to the present invention, its detailed description is omitted herein. The swing inverter 42 drives an electric motor 48 for swing operations (electric swing motor 48) responsive to the swing speed instruction. The electric swing motor 48 is mechanically connected to an unillustrated upperstructure via an unillustrated reduction gear box, and rotates the unillustrated upperstructure.

In the fourth embodiment, the solenoid selector valve 37 is arranged between the boom cylinder 47c and the control valve 45. The solenoid selector valve 37 normally communicates the boom cylinder 47c and the control valve 45 with each other. When the unillustrated lever is operated to a boom-lowering side, however, the solenoid selector valve 37 communicates, responsive to a regeneration signal outputted from the controller 300, the boom cylinder 47c and the hydraulic motor 38 with each other when the regeneration signal is ON. The hydraulic motor 38 is connected to the electric motor 4, and by the oil supplied from the boom cylinder 47c, operates as a motor to rotate the electric motor 4.

At this time, the controller 300 receives a lever signal corresponding to a stroke of the unillustrated lever from an unillustrated potentiometer attached to the unillustrated lever, receives a pressure signal corresponding to a pressure of the boom cylinder 47c from the pressure sensor 2, receives a 3-phase current from the current sensor 5a which the inverter 5 has, and receives a regeneration permitting signal from an unillustrated regeneration permitting switch. As the computations at the controller 300 and operations thereof are similar to those in the third embodiment, their description is omitted herein. The inverter 5 regeneratively controls the electric motor 4 responsive to the 3-phase voltage instruction transmitted from the controller 300, and supplies the regenerative electric power to the electric storage device 8.

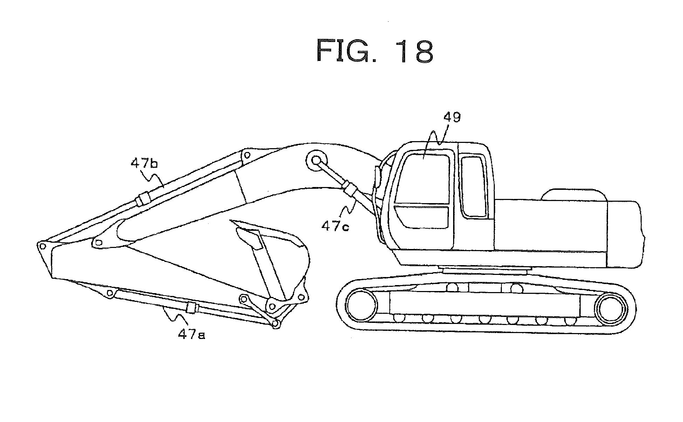

An external view of the battery-powered excavator provided with the actuator control system according to the fourth embodiment described with reference to FIG. 17 is shown in FIG. 18. By controlling unillustrated levers in a cab 49, an operator allows the bucket cylinder 47a, arm cylinder 47b and boom cylinder 47c to extend or retract so that digging work can be performed.

Owing to the construction described above, a stable boom-lowering speed can be obtained during regeneration in the fourth embodiment in which the present invention is applied to the battery-powered excavator.

In the first to third embodiments described above, the present invention is applied to forklift trucks by way of example. In the fourth embodiment, the present invention is applied to the battery-powered excavator. However, the present invention is not limited to such applications, and can be applied to control systems that drive an actuator by another electric motor, for example, to hybrid construction machines that have an engine and an electric storage device.

**Legend**

2···pressure sensor (load sensing means), 3··· hydraulic cylinder (actuator), 4···electric motor, 5a···current sensor (current sensing means), 22···load cell (load sensing means), 100,200,300··· controller (actuator control system), 121, 321···target speed computing unit (target speed computing means), 122, 222···motoring/regeneration determination unit (motoring/regeneration determination means), 123, 223, 323···torque instruction computing unit (torque instruction computing means), 124··· rpm switching device, 131···current instruction computing unit (current instruction computing means), 132···current converter (current conversion means), 133···current control unit (voltage instruction computing means), 134···voltage converter (voltage conversion means), 135···integrator (integration means)

**Claims**

1. An actuator control system for controlling an actuator to be driven by an electric motor, **characterized by** being provided with:

   a target speed computing means for computing a target rpm for the electric motor based on an operating signal for the actuator,
   a load sensing means for sensing a load applied to the actuator,
   a torque instruction computing means for computing a torque instruction for the electric motor based on the load sensed by the load sensing means,
   a current instruction computing means for computing a vector instruction on a current, which is to be allowed to flow to the electric motor, from the torque instruction,
   a current sensing means for sensing a 3-phase current flowing to the electric motor,
   a current conversion means for converting the 3-phase current, which has been sensed by the current sensing means, to a d-axis current and q-axis current (the d-axis current and q-axis current will hereinafter be called "the current vector"),
   a voltage instruction computing means for computing a voltage vector instruction corresponding to a deviation between the current vector instruction and the current vector, and
   a voltage conversion means for converting the voltage vector instruction to a voltage instruction, and further, outputting the voltage instruction to a control unit for the electric motor,
   wherein the current conversion means and voltage conversion means perform the respective conversions based on the target rpm computed by the target speed computing means.

2. The actuator control system according to claim 1, wherein:

   the torque instruction computing means computes the torque instruction for the electric motor by using a value, which has been obtained by smoothening the load sensed by the load sensing means, such that an amount of change in current for a momentary change in the load applied to the actuator becomes smaller than an amount of change in current for a constant change in the load applied to the actuator.

3. The actuator control system according to claim 1 or 2, wherein:

   the actuator control system is further provided with a motoring/regeneration determination means for determining, based on the load sensed by the load sensing means and the target rpm computed by the target speed computing means, whether an operation of the electric motor is motoring or regeneration,
   the current conversion means and voltage conversion means perform the respective conversions based on the target rpm computed by the target speed computing means when regeneration is determined by the motoring/regeneration determination means, but the current conversion means and voltage conversion means perform the respective conversions based on an actual rpm of the electric motor when motoring is determined by the motoring/regeneration determination means,
   the actuator control system is still further provided with an integration means for integrating the target rpm computed by the target speed computing means and the actual rpm of the electric motor, and

the current conversion means and voltage conversion means perform the respective conversions based on a value integrated by the integration means.

4. The actuator control system according to claim 3, wherein:

an induction motor is used as the electric motor.

5. The actuator control system according to claim 3, wherein:

the torque instruction computing means computes the torque instruction with further reference to the target rpm computed by the target speed computing means.

6. The actuator control system according to claim 3, wherein:

the torque instruction computing means computes the torque instruction by adding a torque, which corresponds to the amount of change in the load applied to the actuator, beforehand to a temporal average of torques corresponding to loads applied to the actuator.

7. A working machine provided with the actuator control system according to any one of claims 1-6.

**Amended claims under Art. 19.1 PCT**

**1.** (As amended) An actuator control system for controlling an actuator to be driven by an electric motor, **characterized by** being provided with:

a target speed computing unit that computes a target rpm for the electric motor based on an operating signal corresponding to an amount of operation for the actuator,
a torque instruction computing unit that computes a torque instruction for the electric motor based on a pressure signal outputted from a load sensing device that senses a load applied to the actuator,
a motoring/regeneration determination unit that determines, based on the pressure signal and the target rpm, whether an operation of the electric motor is motoring or regeneration,
a current instruction computing unit that computes a vector instruction on a current, which is to be supplied to the electric motor, based on the torque instruction,
a current converter that converts a 3-phase current, which is flowing to the electric motor and is outputted from a current sensor that senses the 3-phase current, to a current vector as a d-axis current and q-axis current,
a voltage instruction computing unit that computes a voltage vector instruction based on a deviation between the current vector instruction and the current vector,
a voltage converter that converts the voltage vector instruction to a 3-phase voltage instruction, and
an integrator that integrates the target rpm and an actual rpm of the electric motor,
wherein the current converter and the voltage converter perform the respective conversions based on the a value integrated by the integrator by using the target rpm when regeneration is determined by the motoring/ regeneration determination unit but by using the actual rpm when motoring is determined by the motoring/ regeneration determination unit.

**2.** (As amended) The actuator control system according to claim 1, wherein:

the torque instruction computing unit computes the torque instruction for the electric motor by smoothening the load, which has been sensed by the load sensing device, such that an amount of change in current for a momentary change in the load applied to the actuator becomes smaller than an amount of change in current for a constant change in the load applied to the actuator.

**3.** (Cancelled)

**4.** (As amended) The actuator control system according to claim 1, wherein:

an induction motor is used as the electric motor.

**5.** (As amended) The actuator control system according to claim 1, wherein:

the torque instruction computing unit computes the torque instruction with further reference to the target rpm.

**6.** (As amended) The actuator control system according to claim 1, wherein:

the torque instruction computing unit computes the torque instruction by adding a torque, which corresponds to the amount of change in the load applied to the actuator, beforehand to a temporal average of torques corresponding to loads applied to the actuator.

**7.** (As amended) A working machine provided with the actuator control system according to any one of claims 1, 2, 4, 5 and 6.

# FIG. 1

Equal power curve L2     Equal power curve L1

Reaction torque line L0

Torque

rpm (reverse direction)    O    rpm (normal direction)

# FIG. 2

# FIG. 3

# FIG. 4

# FIG. 5

FIG. 6

130

131

Torque
instruction

| CURRENT
INSTRUCTION
COMPUTING
UNIT |

Current vector
instruction

Voltage vector instruction

| CURRENT
CONTROL
UNIT |

| VOLTAGE
CONVERTER |

3-phase voltage
instruction

132

3-phase
current

| CURRENT
CONVERTER |

Current vector

133

134

135

Post-change
rpm

| INTEGRATOR |

Rotor phase

EP 2 549 642 A1

# FIG. 7A

Current vector
instruction

q-axis current
instruction

Current phase

d-axis current
instruction

# FIG. 7B

Current vector
instruction

q-axis current

Current phase

d-axis current

Phase
deviation

# FIG. 8

Lifting

Fork speed

0

Target fork speed

Lowering

Actual fork speed

Motoring

DC current

0

Regeneration

$T_A$

Time

## FIG. 9

## FIG. 10

# FIG. 11

# FIG. 12

EP 2 549 642 A1

# FIG. 13

EP 2 549 642 A1

# FIG. 14

# FIG. 15

EP 2 549 642 A1

# FIG. 16

# FIG. 17

FIG. 18

## INTERNATIONAL SEARCH REPORT

| International application No. |
| --- |
| PCT/JP2011/050758 |

**A. CLASSIFICATION OF SUBJECT MATTER**
*H02P21/00*(2006.01)i, *B66F19/00*(2006.01)i, *F15B21/14*(2006.01)i, *H02P27/04*
(2006.01)i, *H02P29/00*(2006.01)i

According to International Patent Classification (IPC) or to both national classification and IPC

**B. FIELDS SEARCHED**

Minimum documentation searched (classification system followed by classification symbols)
H02P21/00, B66F19/00, F15B21/14, H02P27/04, H02P29/00

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho  1971-2011   Toroku Jitsuyo Shinan Koho   1994-2011

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2006-238631 A  (Mitsubishi Heavy Industries, Ltd.), 07 September 2006 (07.09.2006), paragraphs [0016] to [0035] & US 2006/0192510 A1    & EP 1696555 A2 | 1-2,7 |
| Y | JP 2006-232492 A  (Mitsubishi Heavy Industries, Ltd.), 07 September 2006 (07.09.2006), paragraph [0026] & US 2006/0192519 A1    & EP 1695861 A2 | 1-2,7 |
| Y | JP 2003-230204 A  (Komatsu Ltd.), 15 August 2003 (15.08.2003), fig. 3 (Family: none) | 2 |

| [X] Further documents are listed in the continuation of Box C. | [ ] See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 12 April, 2011 (12.04.11) | Date of mailing of the international search report 19 April, 2011 (19.04.11) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

<table>
<tr><td colspan="2">International application No.</td></tr>
<tr><td colspan="2">PCT/JP2011/050758</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2002-95299 A  (Toshiba Corp.),<br>29 March 2002 (29.03.2002),<br>entire text<br>(Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006336846 A

- JP 2006336843 A